# EUROPEAN PATENT SPECIFICATION

(11) **EP 3 671 185 B1**
(45) Date of publication and mention of the grant of the patent: **23.10.2024**
(21) Application number: 19208087.7
(22) Date of filing: 08.11.2019
(51) Int. Cl.: G01N 21/74, H05B 1/02, H01F 27/40

(54) **GRAPHITE FURNACE WITH TRANSFORMER**
GRAPHITOFEN MIT TRANSFORMATOR
FOUR À GRAPHITE AVEC TRANSFORMATEUR

(30) Priority: 20.12.2018 CN 201811562716
(43) Date of publication of application: 24.06.2020
(73) Proprietor: Shimadzu Corporation, Kyoto-shi, Kyoto 604-8511 (JP)
(72) Inventor: LIU, Yukun, Shanghai, Shanghai 200233 (CN); SUGIHARA, Kazuo, Kyoto-shi, Kyoto 604-8511 (JP)
(74) Representative: Mewburn Ellis LLP

(56) References cited:
- WO-A1-2017/155010
- DE-A1- 102014 220 145
- JP-A- 2007 173 702
- US-A- 4 981 356
- US-A1- 2019 066 897

## Description

### FIELD OF THE INVENTION

The present invention relates to a graphite furnace including a transformer.

### DESCRIPTION OF THE BACKGROUND ART

When the characteristic spectral beam emitted from a lamp of a particular element to be analyzed in a sample passes through an atomic vapor which is obtained by atomizing the sample, it is absorbed by ground-state atoms of the particular element in the atomic vapor, which reduces the intensity of the radiation beam. An atomic absorption spectrophotometer is used to analyze the content of a particular element in a sample based on an absorption intensity of the radiation beam. A graphite furnace atomic absorption spectrophotometer has been widely used as an atomic absorption spectrophotometer since the graphite furnace atomic absorption spectrophotometer has the advantages of a high heating rate and a high absolute sensitivity. The graphite furnace atomic absorption spectrophotometer is provided with a graphite furnace as an atomizer so as to decompose a compound into an atomic vapor of free atoms.

Conventionally, when using a graphite furnace atomic absorption spectrophotometer to perform analytical measurements, in order to keep the temperature of a transformer in the graphite furnace within a suitable temperature range, each time after the graphite furnace is used to perform an analytical measurement, a cooling time is set by software so as to lower the temperature of the transformer before the next analytical measurement. Since the cooling time set for the transformer is sufficiently long, the temperature of the transformer may be reduced to a fairly low level, which will not affect the service life and performance of the transformer.

Patent application document US4981356A discloses an apparatus for electrothermal atomization of samples, including a graphite furnace and a temperature sensor applied to a steel tube for controlling the current in a transformer supplying the steel tube.

Patent application document WO 2017/155010A1 discloses a coil part capable of improving heat dissipation. Patent application document JP 2007173702A discloses a temperature detecting type magnetic device. The documents WO2017/155010A1 and JP 2007173702A disclose transformers wherein a temperature sensor is connected to a heat conducting member disposed between the primary and secondary coil of the transformer.

Patent application document DE102014220145A1 discloses a cooling monitoring device of transformer cooling device used for electro-welding transformer. In this device, electrical current is supplied to the transformer when the temperature of the transformer is lower than an upper limit.

### SUMMARY OF THE INVENTION

### TECHNICAL PROBLEM

In order to increase the analytical measurement speed of the graphite furnace atomic absorption spectrophotometer to the maximum extent, it is considered to shorten the cooling time of the transformer. However, if the cooling time of the transformer is shortened, the temperature of the transformer may become higher, and if the temperature exceeds a suitable temperature range, it will affect the service life and performance of the transformer. In a conventional transformer, it is impossible for the operator to determine whether or not the temperature of the transformer is within the suitable temperature range. In order to ensure that the temperature of the transformer is within a suitable temperature range during normal operation of the graphite furnace, it is required to monitor the temperature of the transformer.

The present invention has been made to solve the above-mentioned problem, and an object of the present invention is to provide a graphite furnace including a transformer and a mechanism for detecting a temperature of the transformer, whereby it is possible to ensure that the temperature of the transformer is within the suitable temperature range during normal operation by monitoring the temperature of the transformer so as to improve the safety performance, and it is possible to prevent the analytical measurement speed from being limited more than necessary during the analytical measurement so as to increase the analytical measurement speed without changing the capacity of the transformer.

### SOLUTION TO PROBLEM

In order to attain an object mentioned above, a graphite furnace according to the present invention includes a transformer and a temperature monitoring unit according to claim 1 herein. The transformer includes a heat conductive member disposed between a primary coil and a secondary coil of the transformer and a temperature sensor assembly connected to the heat conductive member and configured to detect a temperature conducted from the heat conductive member so as to obtain a temperature measurement value. The temperature monitoring unit is preset with a first threshold value, and is configured to receive the temperature measurement value from the temperature sensor assembly and instruct the transformer to stop operating when the temperature measurement value is greater than the first threshold value.

### ADVANTAGEOUS EFFECTS OF INVENTION

According to the present invention, it is possible to ensure that the temperature of the transformer is within the suitable temperature range during normal operation by monitoring the temperature of the transformer so as to improve the safety performance, and it is possible to prevent the analytical measurement speed from being limited more than necessary during the analytical measurement so as to increase the analytical measurement speed without changing the capacity of the transformer.

### BRIEF DESCRIPTION OF THE DRAWINGS

Fig. 1 is a schematic diagram illustrating a transformer according to the present embodiment;
Fig. 2 is a plan view of a heat conductive member;
Fig. 3 is a side view of the heat conductive member;
Fig. 4 is a structural diagram illustrating a temperature sensor assembly; and
Fig. 5 is a circuit block diagram illustrating a temperature sensor assembly and a temperature monitoring unit.

### DESCRIPTION OF THE PREFERRED EMBODIMENTS

Hereinafter, an embodiment of the present invention will be described in detail with reference to the accompanying drawings.

A graphite furnace atomic absorption spectrophotometer is equipped with a graphite furnace as an atomizer. In the present embodiment, the graphite furnace includes a transformer 1 and a temperature monitoring unit 6. The transformer 1 is configured to heat the graphite furnace for analytical measurement, and the temperature monitoring unit 6 is configured to monitor the temperature of the transformer 1.

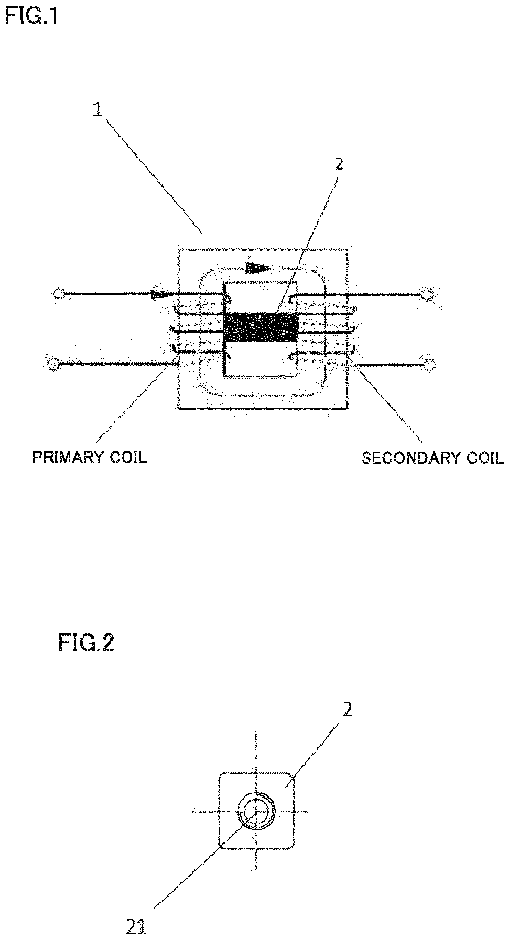

Fig. 1 is a schematic diagram illustrating the transformer 1 according to the present embodiment. As illustrated in Fig. 1, the heat conductive member 2 is disposed between a primary coil and a secondary coil of the transformer 1. In a transformer, since the temperature is the highest between the primary coil and the secondary coil, by disposing the heat conductive member between the primary coil and the secondary coil, it is guaranteed that the temperature measurement value is the highest in the transformer.

Aluminum is excellent in thermal conductivity and cheap in cost, and has no effect on the operation of the transformer. Therefore, in the present embodiment, the heat conductive member 2 is preferably made of an aluminum block. However, the present invention is not limited thereto, and any other material excellent in thermal conductivity may be used.

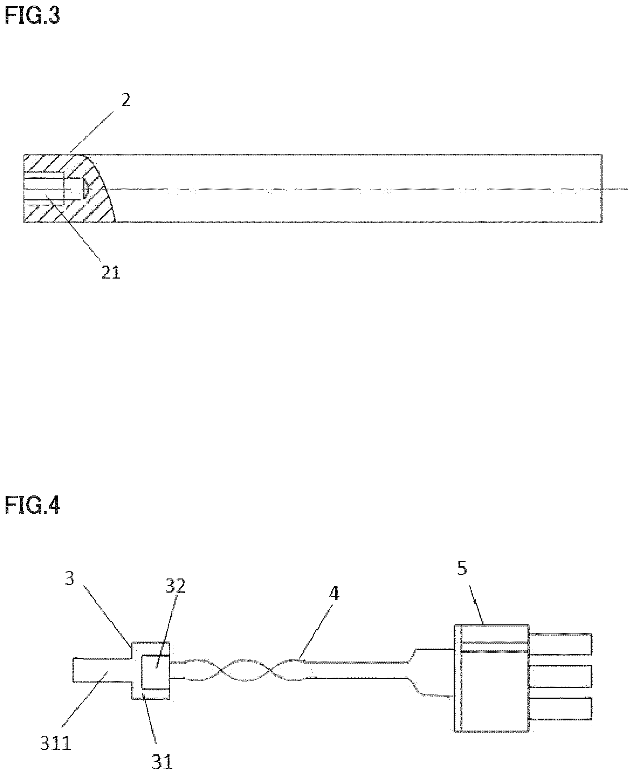

Fig. 2 is a plan view of the heat conductive member 2, and Fig. 3 is a side view of the heat conductive member 2.

As illustrated in Figs. 2 and 3, a tip end of the heat conductive member 2 is formed with a recess 21, and a female screw thread is formed in the recess 21. The recess 21 is used to form a connection with a temperature sensor assembly 3.

Fig. 4 is a structural diagram illustrating the temperature sensor assembly 3. As illustrated in Fig. 4, the temperature sensor assembly 3 includes a housing 31. An end surface of the housing 31 that faces the tip end of the heat conductive member 2 is formed with a projecting member 311, and a male screw thread is formed on the projecting member 311.

A temperature sensor 32 is disposed inside the housing 31, and the temperature sensor 32 is fixed in the housing 31 with a heat conductive adhesive. The temperature sensor 32 may be a PSB-S3 thermistor, for example. One end of the temperature sensor 32 is connected to a cable 4 and a connection terminal 5 for transmitting a temperature measurement value.

The housing 31 and the heat conductive member 2 are connected to each other by coupling the male screw thread of the projecting member 311 to the female screw thread of the recess 21, whereby the temperature sensor assembly 3 is fixed on the heat conductive member 2. The temperature of the transformer 1 is transferred to the temperature sensor 32 via the heat conductive member 2. The temperature sensor 32 senses the temperature, generates a temperature measurement value, and transmits the temperature measurement value via the cable 4 and the connection terminal 5.

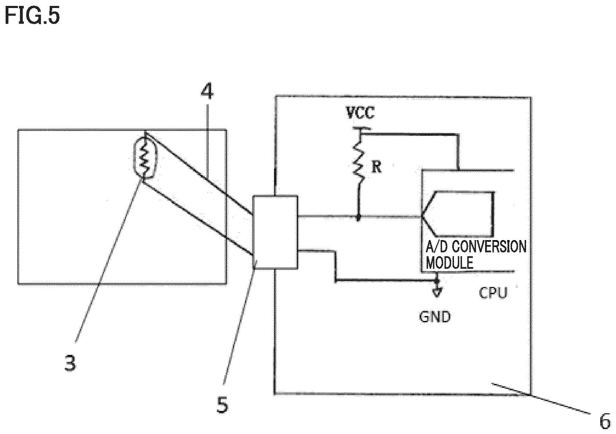

Fig. 5 is a circuit block diagram illustrating the temperature sensor assembly 3 and the temperature monitoring unit 6.

As illustrated in Fig. 5, the cable 4 and the connection terminal 5 drawn from the temperature sensor assembly 3 are connected to the temperature monitoring unit 6.

The temperature monitoring unit 6 may be, for example, a CPU board. The temperature measurement value by the temperature sensor 32 is transmitted to the CPU board via the cable 4 and the connection terminal 5, and the CPU board transmits the data from the temperature sensor to a CPU via an analog-digital conversion circuit. The CPU monitors the temperature of the transformer 1.

The temperature monitoring unit 6 is preset with a first threshold value (for example, 150°C). The first threshold indicates a suitable operating temperature of the transformer. If the temperature of the transformer is lower than the first threshold, it indicates that the transformer is within a suitable temperature range.

Hereinafter, the operation of the transformer 1 during working will be described.

In order to perform an analytical measurement by using the graphite furnace, first, the operator actuates the transformer 1 in the graphite furnace so as to heat the graphite furnace, which causes a sample placed in the graphite furnace to decompose. The heat conductive member 2 disposed between the primary coil and the secondary coil transmits the temperature to the temperature sensor assembly 3 connected to the heat conductive member 2, and the temperature sensor 32 disposed inside the temperature sensor assembly 3 senses the temperature of the transformer 1 and generates a temperature measurement value. The generated temperature measurement value is transmitted to the temperature monitoring unit 6 via the cable 4 and the connection terminal 5. The temperature monitoring unit 6 performs an A/D conversion on the data from the temperature sensor 32 so as to monitor the temperature of the transformer 1. The temperature monitoring unit 6 is preset with a first threshold, and is configured to receive the temperature measurement value from the temperature sensor 32. If the monitored temperature measurement value is smaller than the first threshold, it means that the temperature of the transformer 1 is within the suitable temperature range, and the transformer 1 operates normally. If the monitored temperature measurement is greater than the first threshold, it means that the temperature of the transformer 1 is beyond the suitable temperature range, the temperature monitoring unit 6 instructs the transformer 1 to stop operating. After the operation of the transformer 1 is stopped, the temperature of the transformer 1 drops rapidly, and after about several tens of seconds, the operator manually restarts the transformer 1 so as to perform the next analytical measurement.

Therefore, it is possible to ensure that the temperature of the transformer in the graphite furnace is within the suitable temperature range during normal operation by monitoring the temperature of the transformer so as to improve the safety performance, and it is possible to prevent the analytical measurement speed from being limited more than necessary during the analytical measurement so as to increase the analytical measurement speed without changing the capacity of the transformer.

Although the preferred embodiment of the present invention has been described above, the present invention is not limited thereto. The specific configuration may be modified appropriately without departing from the scope of the invention as defined by the appended claims.

For example, in the above embodiment, it is described that after the transformer is instructed to stop operating by the temperature monitoring unit, the operator may manually restart the transformer after about several tens of seconds. However, it is difficult to determine the length of time because it is usually selected by the operator based on experience. Thus, it is acceptable that the temperature monitoring unit is further preset with a second threshold value that is smaller than the first threshold value, and after the operation of the transformer is stopped, only when the temperature measurement value becomes smaller than the second threshold value, the transformer is allowed to re-operate. Moreover, it is acceptable that the temperature monitoring unit is further preset with a prescribed time, and after the operation of the transformer is stopped, only when the prescribed time has elapsed, the transformer is allowed to re-operate.

For example, in the above embodiment, it is described that the heat conductive member and the temperature sensor assembly are connected by screw thread coupling, but they may be connected by the other means such as snapping.

### REFERENCE SIGNS LIST

1: transformer; 2: heat conductive member; 21: recess; 3: temperature sensor assembly; 31: housing; 311: projecting member; 32: temperature sensor; 4: cable; 5: connection terminal; 6: temperature monitoring unit

## Claims

1. A graphite furnace for atomic absorption analysis comprising:
a transformer (1) configured to be used in the graphite furnace so as to heat the graphite furnace for performing analytical measurements; and
a temperature monitoring unit (6) configured to monitor a temperature of the transformer (1),
the transformer (1) including:
a heat conductive member (2) disposed between a primary coil and a secondary coil of the transformer; and
a temperature sensor assembly (3) connected to the heat conductive member and configured to detect a temperature conducted from the heat conductive member so as to obtain a temperature measurement value,
the temperature monitoring unit (6) being preset with a first threshold value, and being configured to receive the temperature measurement value from the temperature sensor assembly (3) and instruct the transformer (1) to stop operating when the temperature measurement value is greater than the first threshold value.

2. The graphite furnace according to claim 1, wherein
the temperature sensor assembly (3) includes a housing (31), and a temperature sensor (32) is disposed inside the housing (31),
the temperature sensor (32) is connected to the temperature monitoring unit (6) via a cable (4) and a connection terminal (5).

3. The graphite furnace according to claim 1, wherein
the temperature monitoring unit (6) is further preset with a second threshold value which is smaller than the first threshold value, and
after the operation of the transformer (1) is stopped, only when the temperature measurement value becomes smaller than the second threshold value, the transformer (1) is allowed to re-operate.

4. The graphite furnace according to claim 1, wherein
the temperature monitoring unit (6) is further preset with a prescribed time, and
after the operation of the transformer (1) is stopped, only when the prescribed time has elapsed, the transformer (1) is allowed to re-operate.

5. The graphite furnace according to claim 1, wherein
the heat conductive member (2) is connected to the temperature sensor assembly (3) via screw thread coupling.

6. The graphite furnace according to claim 5, wherein
the temperature sensor assembly (3) includes a housing (31), and a temperature sensor (32) is disposed inside the housing (31),
a tip end of the heat conductive member (2) is formed with a recess, and a female screw thread is formed in the recess,
an end surface of the housing (31) that faces the tip end of the heat conductive member (2) is formed with a projecting member, and a male screw thread is formed on the projecting member.

7. The graphite furnace according to claim 1, wherein
the heat conductive member (2) is an aluminum block.

## Patentansprüche

1. Graphitofen zur Atomabsorptionsanalyse, umfassend:
einen Transformator (1), der dazu ausgelegt ist, im Graphitofen verwendet zu werden, um den Graphitofen zur Durchführung von analytischen Messungen zu erhitzen; und
eine Temperaturüberwachungseinheit (6), die dazu ausgelegt ist, eine Temperatur des Transformators (1) zu überwachen,
wobei der Transformator (1) Folgendes umfasst;
ein Wärmeleitelement (2), das zwischen einer Primärspule und einer Sekundärspule des Transformators angeordnet ist; und
eine Temperatursensoranordnung (3), die mit dem Wärmeleitelement verbunden und dazu ausgelegt ist, eine Temperatur zu detektieren, die vom Wärmeleitelement abgeleitet wird, um einen Temperaturmesswert zu erhalten,
wobei die Temperaturüberwachungseinheit (6) mit einem ersten Schwellenwert voreingestellt und dazu ausgelegt ist, um den Temperaturmesswert von der Temperatursensoranordnung (3) zu empfangen und den Transformator (1) anzuweisen, den Betrieb anzuhalten, wenn der Temperaturmesswert größer ist als der erste Schwellenwert.

2. Graphitofen nach Anspruch 1, wobei
die Temperatursensoranordnung (3) ein Gehäuse (31) umfasst und ein Temperatursensor (32) innerhalb des Gehäuses (31) angeordnet ist,
der Temperatursensor (32) mit der Temperaturüberwachungseinheit (6) über ein Kabel (4) und einen Verbindungsanschluss (5) verbunden ist.

3. Graphitofen nach Anspruch 1, wobei
die Temperaturüberwachungseinheit (6) ferner mit einem zweiten Schwellenwert voreingestellt ist, der kleiner ist als der erste Schwellenwert, und
nachdem der Betrieb des Transformators (1) angehalten wurde, der Transformator (1) den Betrieb erst dann wiederaufnehmen kann, wenn der Temperaturmesswert kleiner wird als der zweite Schwellenwert.

4. Graphitofen nach Anspruch 1, wobei
die Temperaturüberwachungseinheit (6) ferner mit einem vorgeschriebenen Zeitraum voreingestellt ist, und
nachdem der Betrieb des Transformators (1) angehalten wurde, der Transformator (1) den Betrieb erst dann wiederaufnehmen kann, wenn der vorgeschriebene Zeitraum verstrichen ist.

5. Graphitofen nach Anspruch 1, wobei
das Wärmeleitelement (2) mit der Temperatursensoranordnung (3) über eine Schraubgewindekopplung verbunden ist.

6. Graphitofen nach Anspruch 5, wobei
die Temperatursensoranordnung (3) ein Gehäuse (31) umfasst und ein Temperatursensor (32) im Gehäuse (31) angeordnet ist,
ein Spitzenende des Wärmeleitelements (2) mit einer Aussparung ausgebildet ist und ein Innenschraubengewinde in der Aussparung ausgebildet ist,
eine Endfläche des Gehäuses (31), die dem Spitzenende des Wärmeleitelements (2) zugewandt ist, mit einem Vorsprungselement ausgebildet ist und ein Außen-Schraubengewinde auf dem Vorsprungselement ausgebildet ist.

7. Graphitofen nach Anspruch 1, wobei
das Wärmeleitelement (2) ein Aluminiumblock ist.

## Revendications

1. Four de graphite pour une analyse d'absorption atomique, comprenant :
un transformateur (1) configuré pour être utilisé dans le four de graphite afin de chauffer le four de graphite pour effectuer des mesures analytiques ; et
une unité de surveillance de température (6) configurée pour surveiller une température du transformateur (1),
le transformateur (1) incluant :
un élément conducteur de chaleur (2) disposé entre une bobine primaire et une bobine secondaire du transformateur ; et
un ensemble de capteur de température (3) connecté à l'élément conducteur de chaleur et configuré pour détecter une température conduite à partir de l'élément conducteur de chaleur de manière à obtenir une valeur de mesure de température,
l'unité de surveillance de température (6) étant préréglée avec une première valeur de seuil, et étant configurée pour recevoir la valeur de mesure de température à partir de l'ensemble de capteur de température (3) et ordonner au transformateur (1) de cesser de fonctionner lorsque la valeur de mesure de température est supérieure à la première valeur de seuil.

2. Four de graphite selon la revendication 1, dans lequel
l'ensemble de capteur de température (3) inclut un boîtier (31), et un capteur de température (32) est disposé à l'intérieur du boîtier (31),
le capteur de température (32) est connecté à l'unité de surveillance de température (6) via un câble (4) et une borne de connexion (5).

3. Four de graphite selon la revendication 1, dans lequel
l'unité de surveillance de température (6) est en outre préréglée avec une seconde valeur de seuil qui est inférieure à la première valeur de seuil, et
après l'arrêt du fonctionnement du transformateur (1), uniquement lorsque la valeur de mesure de température devient inférieure à la seconde valeur de seuil, le transformateur (1) est autorisé à fonctionner à nouveau.

4. Four de graphite selon la revendication 1, dans lequel
l'unité de surveillance de température (6) est en outre préréglée avec un temps prescrit, et
après l'arrêt du fonctionnement du transformateur (1), uniquement lorsque le temps prescrit s'est écoulé, le transformateur (1) est autorisé à fonctionner à nouveau.

5. Four de graphite selon la revendication 1, dans lequel
l'élément conducteur de chaleur (2) est connecté à l'ensemble de capteur de température (3) via un raccord fileté.

6. Four de graphite selon la revendication 5, dans lequel
l'ensemble de capteur de température (3) inclut un boîtier (31), et un capteur de température (32) est disposé à l'intérieur du boîtier (31),
une extrémité de pointe de l'élément conducteur de chaleur (2) est formée avec un évidement, et un filetage de vis femelle est formé dans l'évidement,
une surface d'extrémité du boîtier (31) qui fait face à l'extrémité de pointe de l'élément conducteur de chaleur (2) est formée avec un élément faisant saillie, et un filetage de vis mâle est formé sur l'élément faisant saillie.

7. Four de graphite selon la revendication 1, dans lequel
l'élément conducteur de chaleur (2) est un bloc d'aluminium.
